(19) Europäisches Patentamt

European Patent Office

Office européen des brevets

(11) **EP 1 048 960 A2**

(12) **EUROPÄISCHE PATENTANMELDUNG**

(43) Veröffentlichungstag:
**02.11.2000 Patentblatt 2000/44**

(51) Int. Cl.⁷: **G01S 13/18**, G01S 13/93, G01S 13/10

(21) Anmeldenummer: **00103125.1**

(22) Anmeldetag: **16.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.04.1999 DE 19919227**

(71) Anmelder:
**Valeo Schalter und Sensoren GmbH
74321 Bietigheim-Bissingen (DE)**

(72) Erfinder:
**Reiche, Martin, Dipl.-Ing.
53639 Königswinter (DE)**

(74) Vertreter:
**Dreiss, Fuhlendorf, Steimle & Becker,
Patentanwälte
Postfach 10 37 62
70032 Stuttgart (DE)**

(54) **Flexible Ansteuerung für KFZ-Nahbereichs-Pulsradar**

(57)    Die Erfindung betrifft ein Verfahren zum Bestimmen des Abstands zu einem Objekt mittels eines gepulsten elektromagnetischen Signals, wobei die Laufzeit des Signals zu dem Objekt und wieder zurück mit einem vergleichenden Meßprinzip ermittelt und aus der ermittelten Laufzeit der Abstand zu dem Objekt bestimmt wird. Um im Rahmen der vorgegebenen gesetzlichen Bestimmungen bzgl. der spektralen Sendeleistung eine möglichst große Detektionsreichweite und eine möglichst feine Ortsauflösung erzielen zu können, schlägt die Erfindung ein Verfahren vor, bei dem zunächst ein zu beobachtendes Entfernungsfenster, in dem das Objekt potentiell liegt, innerhalb des gesamten Meßbereichs ermittelt wird und dann in dem Entfernungsfenster der Abstand zu dem Objekt bestimmt wird. Vorzugsweise wird zumindest einer der Parameter des Verfahrens, Pulswiederholfrequenz, Dämpfung des Sendesignals, Dämpfung des Empfangssignals oder Zielbeleuchtungszeitraum, in Abhängigkeit von dem zu beobachtenden Entfernungsfenster und/oder von der wahrscheinlichen Reflexionsintensität des zu erwartenden Objekts vor der Bestimmung des Abstands zu dem Objekt eingestellt wird.

Fig. 4

**Beschreibung**

Folgende Erfindung verbessert die Eigenschaften eines Pulsradarsystems, welches im Nahbereich des Automobils primär zur Vermessung von Abständen zu potentiellen Hindernissen benutzt werden soll, beispielsweise in der Applikation einer Park- und Rückfahrhilfe.

Die zu verbessernden Eigenschaften betreffen:

1. Eine optimale Balance zwischen Detektionsreichweite und Ortsauflösung im vorgegebenen Rahmen der gesetzlich zulässigen spektralen Sendeleistung.

2. Eine optimale Kompensation der Dynamik der Reflexionsfluktuation potentieller Ziele sowie der Dynamik der zunehmenden Empfangssignaldämpfung über die Entfernung.

3. Eine Reduzierung der Störempfindlichkeit gegenüber baugleichen oder fremden Systemen mit Emissionen im Empfangsband des beschriebenen Systems.

4. Eine Erhöhung der Detektionswahrscheinlichkeit und die Vermeidung von Zuständen, in welchen potentielle Ziele nicht erkannt werden können.

5. Eine spektrale Spreizung der abgestrahlten Emissionen hin zu einer gleichmäßigen Verteilung zur Vermeidung von EMV-Problemen im Basisband und zur optimalen Nutzung der gesetzlich vorgegebenen spektralen Leistungsdichte im Sendeband.

6. Den Aufbau einer Regelstruktur der vergleichenden Pulslaufzeitvermessung zur Kompensation von temperatur- und bauteilabhängigen Drifterscheinungen des eingesetzten variablen Totzeitgliedes.

7. Die Reduktion von Eingangsrauschen durch eine dem Empfangsnutzsignal optimal angepasste Filterung.

Zum Erreichen der genannten Ziele werden folgende Verfahren eingesetzt:

A.    Der Einsatz einer variablen Pulsweite der Sendepulse wie auch der lokalen Pulse zum Verändern der Breite der zugehörigen Spektren.

B.    Die flexible Vorgabe der Pulswiederholfrequenz in Abhängigkeit von der Vorgabe des zu betrachtenden Entfernungsbereichs sowie der wahrscheinlichen Reflexionsintensität des zu erwartenden Ziels.

C.    Die pseudozufällige Verteilung der Pulswiederholrate über die Zeit zur Spreizung der spektralen Linien des Sende- und Empfangssignals hin zu einem kontinuierlichen Spektrum.

D.    Die variable Dämpfung des Sendesignals in Abhängigkeit von der Vorgabe des zu betrachtenden Entfernungsbereichs sowie der wahrscheinlichen Reflexionsintensität des zu erwartenden Ziels.

E.    Die variable Dämpfung des Empfangssignals in Abhängigkeit von der Vorgabe des zu betrachtenden Entfernungsbereichs sowie der wahrscheinlichen Reflexionsintensität des zu erwartenden Ziels.

F.    Die Veränderung des Zielbeleuchtungszeitraums in Abhängigkeit von der Vorgabe des zu betrachtenden Entfernungsbereichs sowie der wahrscheinlichen Reflexionsintensität des zu erwartenden Ziels.

G.    Der Einsatz eines zweikanaligen I/Q-Systems zur Vermeidung von Detektionsblindstellen.

H.    Der Einsatz einer Driftkompensation der Laufzeitmessung über ein Zeitmeßglied als Basis einer Software-Regelschleife.

I.    Der Einsatz variabel steuerbarer Verstärker zum Aufbau einer kombinierten TGC/AGC-Steuer- und Regelstruktur.

J.    Der Einsatz adaptiver Filtercharakteristiken zur Optimierung des Signal/Rauschabstands der ZF-Signale.

Das eingesetzte Detektionsverfahren beruht darauf, daß mittels eines vergleichenden Prinzips die extrem kurzen Radar-Pulslaufzeiten auf eine wesentlich längere Zeitskala gestreckt und dargestellt werden. Dies passiert durch die Vorgabe eines langsam variierenden Triggers, der sich über den zu vermessenden realen Laufzeitbereich schiebt. Das Verfahren ist in der Fachliteratur als "Equivalent Time Sampling (ETS)" bekannt und technisch seit einiger Zeit bekannt. Beispielsweise wird dieses Verfahren auch in der Oszilloskoptechnik verwendet, um extrem kurze Signale aufzulösen. Wichtig für mehrere in dieser Erfindung vorgeschlagene Verbesserungen ist, daß aufgrund dieses vergleichenden Prinzips ein zu beobachtendes Entfernungsfenster innerhalb des gesamten Meßbereichs noch vor einer realen Detektion einer Zielmeldung gleitend vorgegeben wird und damit die Entfernung eines potentiell delektierten Ziels in etwa bekannt ist. Somit können Voreinstellungen anderer Parameter, welche eine Entfernungsabhängigkeit aufweisen, noch vor einer eventuellen Zieldetektion vorgenommen werden, um die Gesamteigenschaften des Systems zu optimieren.

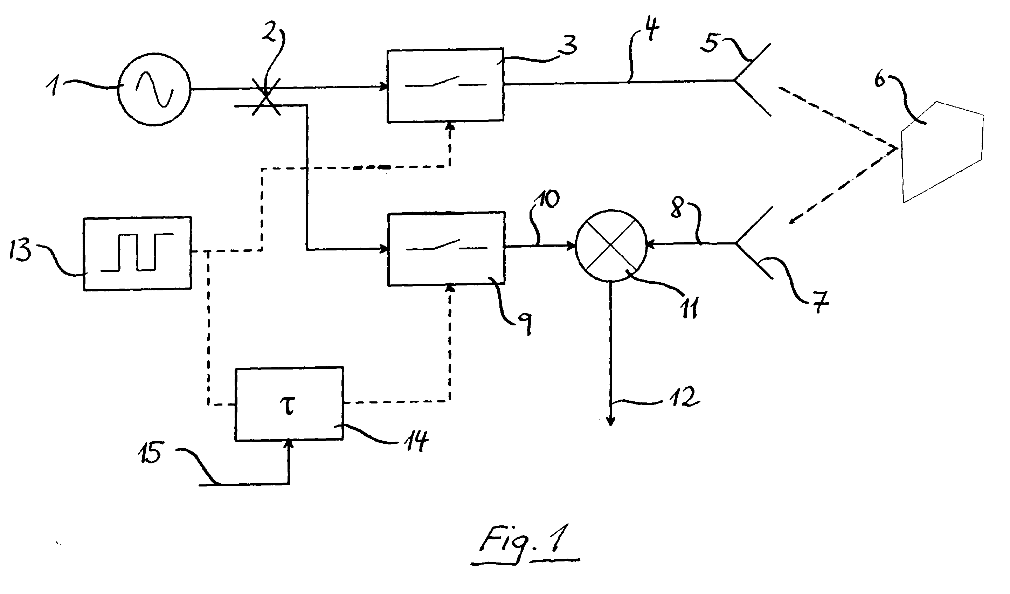

Eine Kurzbeschreibung des vergleichenden Meßprinzips ETS wird nachfolgend unter Bezugnahme auf Fig. 1 der Zeichnungen durchgeführt.

Hochauflösende Pulsradarverfahren basieren auf der Aussendung extrem kurzer Pulse, welche einer Trägerfrequenz aufmoduliert werden. Die Modulation erfolgt durch einen Schalter mit ausreichender Bandbreite, welcher ausreichend kurze Pulse auf die Amplitude eines hochfrequenten Trägers aufprägen kann.

Aufgrund der schnellen Ausbreitungsgeschwindigkeit der elektromagnetischen Wellen im m müssen vergleichende Laufzeitmeßverfahren eingesetzt werden. Die Verzögerung cchen der Aussendung eines Pulses über die Reflexion an einem lm entfernten Objekt bis Empfang dauert beispielsweise etwa 6,7 Nanosekunden und ist mit einem absoluten meßverfahren nicht vermessbar.

Eines dieser vergleichenden Meßverfahren arbeitet nach folgendem Prinzip: Ein Pulswiederholgenerator löst die periodische Aussendung von Sendepulsen aus. Diese Pulse unterliegen der externen Laufzeit zu einem reflektierenden Objekt und zurück. Die empfangene Pulsfolge hat folglich eine Totzeit gegenüber der Sendepulsfolge, welche sich aus der doppelten Objektdistanz dividiert durch die Lichtgeschwindigkeit errechnet. Der gleiche Pulswiederholgenerator löst ebenfalls die Erzeugung einer lokalen periodischen Pulsfolge aus, welche über ein sensorinternes variables Totzeitglied verzögert wird. Die Ansteuerung des variablen Totzeitgliedes erfolgt dabei über eine relativ langsam variierende Sweepspannung. Sowohl die Empfangspulsfolge als auch die lokal im Sensor verzögerte Pulsfolge werden einem Mischer zugeführt, welcher genau dann ein maximales Signal erzeugt, wenn die externe Laufzeit und die lokal durch das Totzeitglied vorgegebene Laufzeit übereinstimmen. In diesem Zustand werden also die Empfangspulsfolge und die Sendepulsfolge so gemischt, daß die zeitlich maximale Korrelation erreicht wird.

zu A.    variable Pulsweite

Die Pulsweite bzw. die äquivalente Pulsdauer $\Delta t$ eines Einzelpulses ist umgekehrt proportional der Spektralflächenbandbreite $\Delta f$ des Pulses. Bei einer periodischen Folge von Pulsen ergibt sich ein Gesamtlinienspektrum mit Linien im Abstand der Pulswiederholfrequenz. Diese Linien sind durch eine Einhüllende eingefaßt, welche eine Breite besitzt, die der Spektralbandbreite des Einzelpulses entspricht.

Vergrößert man die Einzelpulsbreite, so nimmt die mittlere Sendeleistung zu. Die Ortsauflösung nimmt umgekehrt proportional ab. Die Spektralflächenbandbreite als Einhüllende des Gesamtspektrums nimmt ebenfalls ab.

Unter Ortsauflösung versteht man die Fähigkeit eines detektierenden Systems, zwei geometrisch identische Objekte, welche untereinander einen Mindestabstand einhalten, noch signaltechnisch unterscheiden zu können. Ortsauflösung ist ein Charakteristikum, welches besondere im sehr nahen Meßbereich eine entscheidende Rolle spielt. Zum Beispiel muß beim Parken eines Kraftfahrzeugs das Signal eines Pfostens knapp vor einer Wand stehend als das kollisionsrelevantere Hindernis vom Signal der Wand unterschieden werden. Gute Ortsauflösung erfordert kurze Pulse und damit eine Belegung einer großen Signalbandbreite.

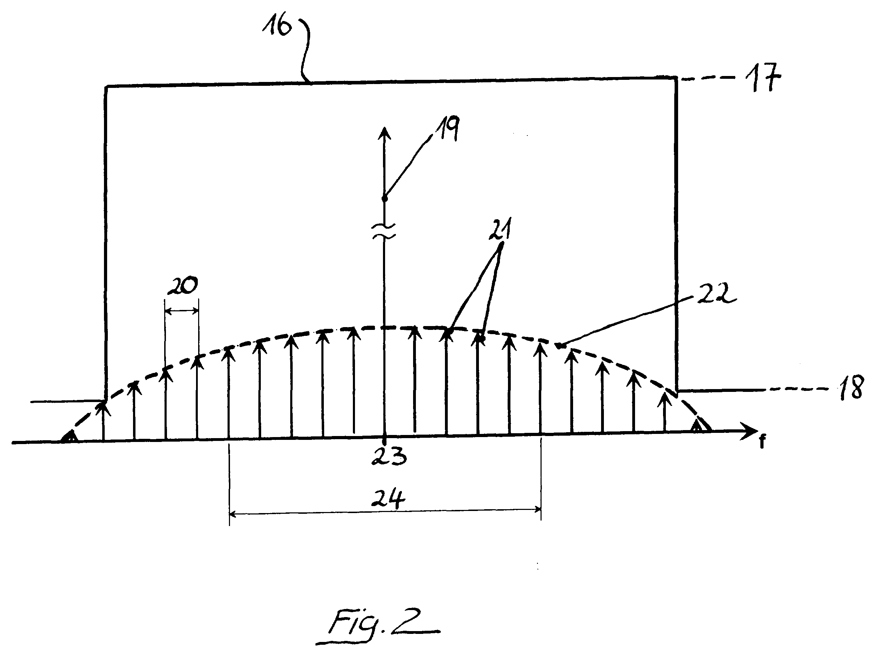

In Fig. 2 ist die spektrale Leistungsverteilung des erfindungsgemäßen Kfz-Nahbereichs-Pulsradars dargestellt. In der nachfolgenden Beschreibung wird auf Fig. 2 Bezug genommen. Die Emittierung von Leistung innerhalb spektraler Bänder unterliegt gesetzlichen Begrenzungen. Beispielsweise gibt der Gesetzgeber die sogenannten ISM-Bänder zur Nutzung mit einer Sendeleistung frei, die höher ist als die Sendeleistung, die außerhalb dieser ISM-Bänder gestattet ist. Wird durch die kurzen Pulse die ISM-Bandbreite überschritten, so muß man die Sendepulsspitzenleistung erheblich reduzieren, um nicht mit den gesetzlichen Vorgaben außerhalb des ISM-Bandes zu kollidieren. Dadurch sinkt die Meßreichweite erheblich. Die maximale Meßreichweite ist im idealen Falle umgekehrt proportional der vierten Wurzel der Sendeleistung.

Ziel der Erfindung ist es, eine variable Pulsweite vorzugeben, welche mit der zu messenden Entfernung zunimmt. Wie in der Einführung erklärt, ist die zu vermessende Entfernung durch das vergleichende Meßprinzip eine bekannte Größe. Dabei wird in Kauf genommen, daß die Ortsauflösung folglich mit zunehmender Entfernung abnimmt.

Im sehr nahen Meßbereich bleibt durch die kurz gewählte Pulsweite also die Ortsauflösung hinreichend gewährleistet. Jedoch muß die Sendeleistung soweit reduziert werden, daß bei Überschreitung der ISM-Bandbreite die Emissionsgrenzen außerhalb des ISM-Bandes nicht überschritten werden. Somit ist die Reichweite im Sendemodus mit kurz gewählten Pulsen sehr begrenzt.

Deshalb wird für Messungen in größerem Entfernungsbereich die Pulsweite vergrößert. Damit wird das Sendespektrum schmaler. Dies erlaubt eine Erhöhung der Sendeleistung, was wiederum eine Voraussetzung der Vermessung von Objekten im größeren Entfernungsbereich ist. Mit der Vergrößerung der Pulsweite sinkt die Ortsauflösung. Dies wird in einer Balance mit der verbesserten Reichweite in Kauf genommen.

Zusammenfassend kann festgehalten werden: Im Nahbereich kurze Pulse, hohe Ortsauflösung, breites Spektrum, deswegen reduzierte Sendeleistung, dadurch begrenzte Reichweite. Im erweiterten Bereich längere Pulse, verschlechterte Auflösung, schmaleres Spektrum, deswegen erhöhte Sendeleisung erlaubt, weil alle Emissionen im ISM-Band und dadurch vergrößerte Reichweite. Diese Balance zwischen Orstauflösung und Reichweite durch Vorgabe der veränderlichen Pulsweite ist Teil der vorliegenden Erfindung.

zu B.    flexible Vorgabe der Pulswiederholfrequenz

Der Mischer des beschriebenen Pulsradarsystems hat integrierende Eigenschaften in dem Sinne, daß mehrere Einzelpulse bei Zieldetektion vom Mischer integriert werden, und das integrierte Resultat den meßbaren ZF-Puls auf der gestreckten äquivalenten Zeitebene erzeugt. Dieses Resultat der Integration klingt bei fehlender weiterer Einspeisung von Einzelpulsen genügend schnell wieder ab.

Die Anzahl der von einer Reflexionsfläche eines Zieles reflektierten und zu einem ZF-Puls in der äquivalenten Zeitebene integrierten Einzelpulse ist von folgenden Parametern abhängig:

a) von der Breite der zeitlichen Korrelation des Pulses in der äquivalenten Zeitebene: Je kürzer der Einzelpuls, desto kürzer die zeitliche Korrelation, desto kürzer die Betrachtungszeit des Radars auf dem Ziel, desto kleiner die Anzahl der insgesamt vom Ziel als Reflexion in der äquivalenten ZF-Ebene auf einen ZF-Puls integrierten Einzelpulse. Der Parameter wird schon gemäß "A. variable Pulsbreite" beeinflußt. Eine verringerte Pulsweite bedeutet eine verkleinerte Breite der zeitlichen Korrelation und damit eine verringerte Anzahl von Einzelpulsen, welche zu einem ZF-Puls integriert werden.

b) von der Geschwindigkeit, mit der das Ziel durch den Sweep überstrichen wird: Je schneller die Geschwindigkeit, desto kürzer die Betrachtungszeit des Radars auf dem Ziel, desto kleiner die Anzahl der insgesamt vom Ziel als Reflexion integrierten Einzelpulse. Der Parameter wird später unter "E. Veränderung des Zielbeleuchtungszeitraums" näher erläutert.

c) von der Pulswiederholfrequenz: Je größer die Pulswiederholfrequenz (PRF), desto größer die Anzahl der insgesamt vom Ziel als Reflexion integrierten Einzelpulse.

Der Parameter PRF soll erfindungsgemäß variiert werden. Dabei soll bei zunehmender Entfernung oder bei der Betrachtung kleinerer Ziele die Pulswiederholfrequenz erhöht werden, um damit die integrierte Energie des ZF-Pulses zu erhöhen. Die mittlere Sendeleistung ist im Idealfall unter Ausschluß sogenannter Integrationsverluste direkt proportional zur Anzahl n der integrierten Einzelpulse. Im realen Fall ist das Empfangs-S/N in etwa proportional

$$n^{0,5} * S/N_{Einzelpuls} < S/N_{Integriert} < n * S/N_{Einzelpuls}.$$

Dabei ist jedoch zu beachten, daß die Größe der spektralen Linien des Sendegesamtspektrums mit wachsender PRF zunimmt und somit keine beliebige Erhöhung der PRF zulässig ist. Des weiteren begrenzen die Integrationsverluste den nutzbaren Bereich einer variablen Pulswiederholfrequenz.

Inhalt der Erfindung ist eine Erhöhung der Pulswiederholfrequenz grundsätzlich mit zunehmender Entfernung zur partiellen Kompensation der zunehmenden Raumdämpfung sowie bei kleinen Zielen mit kleiner Reflexionsfläche zur Erhöhung des S/N nach Integration zu einem ZF-Puls. Umgekehrt soll bei großen Zielen die PRF in einem Maße reduziert werden, daß ein übersteuern des Mischers bzw. der nachgeordneten Verstärker vermieden wird.

Ein Übersteuern ist zu vermeiden, da zum einen die Pulsform des ZF-Pulses verletzt wird, und damit eine ZF-Korrelation auf diese ansonsten bekannte Pulsform ungünstigere Ergebnisse liefert. Zum anderen werden durch ein Übersteuern im allgemeinen Ladungen aufgebaut, die nur mit großen Zeitkonstanten abklingen. Die Detektionsfähigkeit des Radarsystems kann durch solche Abklingvorgänge erheblich beeinträchtigt werden.

Folglich dient die variable PRF einer optimierten Anpassung der Zieldynamik über Reflexion Entfernung an die zur Verfügung stehende Signaldynamik des Radarsystems durch Veränderung der mittleren Sendeleistung. Dies ist ein Ziel der vorliegenden Erfindung.

Die Veränderung der PRF hat einen weiteren Vorteil. Die Ablage der Nebenlinien des Sendespektrums erfolgt wie erklärt im Abstand der PRF. Dies gilt ebenfalls für die Nebenlinien des Spektrums der lokalen Pulsfolge, welche also für zu empfangenden Signale pro Nebenlinie Emfangskanäle mit einer Bandbreite bereitstellt, die der ZF-Bandbreite entspricht. Es kann vorkommen, daß ein Störer spektrale Anteile besitzt, welche einen oder mehrere dieser vom Lokal-Signal gebotenen Kanäle überdeckt, also folglich vom System empfangen werden kann.

Sofern ein schmalbandiger Störer mittels Software-Statistik in der Signalauswertung bemerkt wird, kann durch Veränderung der PRF die spektrale Ablage der Nebenlinien und damit die Ablage der Empfangekanäle verändert werden. Insbesondere für schmalbandige Störer wird damit ein eventuell gestörter Empfangskanal aus dem Spektrum des Störers gezogen. Diese sehr effektive Entstörung gegen schmalbandige Störer ist ebenfalls Teil der Erfindung (vgl. "C. pseudozufällige Verteilung der Pulsiederholrate").

zu C.        pseudozufällige Verteilung der Pulswiederholrate

Wie im Abschnitt A. schon dargestellt, erzeugt eine Pulsfolge mit einer konstanten Pulswiederholfrequenz ein Linienspektrum mit diskreten Linien im Abstand dieser Wiederholfrequenz.

Der Gesetzgeber schreibt die Vermessung der spektralen Leistung mittels eines Frequenzanalysators mit definierter Meßbandbreite vor, welcher über den insgesamt zu vermessenden Spektralbereich zu führen ist. Dabei darf die Messung der Leistung in einem meßbarem Frequenzabschnitt, welcher die Breite der Meßbandbreite besitzt, eine maximale Integrationszeit nicht überschreiten.

Die Definition einer Leistungsgrenze und einer Meßbandbreite verknüpft sich zu einer nicht zu überschreitenden Leistungsdichte, welche allerdings nur mit einer spektralen Auflösung gemessen werden kann, die der eingesetzten Meßbandbreite entspricht.

Ein Beispiel:

Gegeben sei eine konstante Pulswiederholfrequenz von 5 MHz. Die Pulsbreite sei 500 ps. Die Pulsspitzenleistung sei 20dBm. Die Pulsform sei nahezu gaußförmig. Die eingesetzte Meßbandbreite sie 1MHz. Die maximale Meßzeit sei 10ms. Das Gesamtspektrum ergibt sich aus dem Spektrum des Basispulses als Einhüllende mit einer Breite von 2GHz. Diese hüllt eine Folge von Linien im Abstand der PRF ein. Die Linien sind keine streng mathematischen Linien, sondern aufgrund der begrenzten Betrachtungszeit von 10ms jeweils mit einer Si-Funktion der Bandbreite 100Hz gespreizt. Die Leistung der Linien ergibt sich zu 20 dBm + 20∗log(500ps∗5MHz) zu etwa - 32dBm.

Bei der Vermessung werden die -32dBm Leistung immer genau dann gemessen, wenn der Frequenzanalysator mit seiner gegebenen Meßbandbreite von 1 MHz eine der Linien des Pulsfolgespektrums überstreicht. Ansonsten ist die gemessene Leistung 0.

Folglich bietet es sich an, die linienartige spektrale Verteilung hin zu einer gleichmäßigen Verteilung zu spreizen. Dies kann erfolgen durch irgend eine Art von Modulation, z. B. die Frequenzmodulation des Signal-Trägers, auf den wiederum die Pulse durch Amplitudenmodulation aufgeprägt werden.

Die Erfindung schlägt dazu als hardwaretechnisch einfache Möglichkeit die gleichmäßige quasizufallsverteilte Modulation der Pulswiederholfrequenz vor. Dies bedeutet, daß gemäß des oben aufgeführten Beispiels der Abstand zwischen zwei Pulsen nicht konstant 1/5MHz = 200ns beträgt, sondern sich beispielsweise zwischen 150 und 250ns quasizufallsverteilt über die Zeit verändert. Dabei wird darauf geachtet, daß die Zufallsfolge, welche sich nach ihrer Periode wiederholt, die gegebene maximal zulässige Integrationszeit der Messung nicht überschreitet.

Der Effekt einer spektralen Spreizung durch den Einsatz einer Zufallspulswiederholfrequenz zeigt sich in der Erniedrigung der maximal aufretenden spektralen Leistung um mehrere dB. Unter der Annahme, daß die Spreizung eine nahezu gleichmäßige ("weiße") spektrale Leistungsverteilung erzeugt, sinkt die gemessene Leistung in dem vorliegenden Beispiel um den Faktor fünf. (Faktor = PRF/Meßbandbreite).

Statt einer sporadischen Messung einer Leistungsdichte ohne Spreizung von -32 dBm/1MHz = -92dBm/Hz, falls eine spektrale Linie von der Meßbandbreite überdeckt wird, mißt man mit gleichmäßiger Spreizung kontinuierlich eine gleichmäßige Leistungsdichte von -99dBm/Hz.

Inhalt der vorliegenden Erfindung ist die Nutzung der spektralen Spreizung mittels Einsatz einer quasizufallsmodulierten Pulswiederholfrequenz zur Erzeugung einer kontinuierlichen spektralen Verteilung des Sendespektrums. Dies ermöglicht die Erhöhung der Sendeleistung, ohne die gesetzgeberischen Leistungsgrenzen in einer gegebenen Meßbandbreite zu verletzen. Dadurch kann aufgrund der erhöhten Sendeleistung die Reichweite des Systems vergrößert werden, oder für gegebene Ziele mit gegebener Reichweite der Signalrauschabstand des Empfangssignals verbessert werden.

Weiterer Nutzen und ebenfalls Inhalt der Erfindung ist die spektrale Gleichverteilung zur Entstörung gegen gleichartige oder fremde Radarsysteme. Denken wir uns in einem ersten Ansatz den Störer als ein Dauerstrichsignal, welcher also als Spektrum nur eine diskrete Linie besitzt. Das gegebene zu entstörende Pulsradarsystem mit einer konstanten Pulswiederholfrequenz bietet als potentielle Empfangskanäle alle spektralen Linien der lokalen Pulsfolge an. Das Leistungsspektrum der Sendepulsfolge und der lokalen Pulsfolge sind dabei bis auf einen Faktor identisch. Dabei kann der Störer nur auf die Linien des lokalen Spektrums eingemischt werden, deren spektraler Abstand zur spektralen Lage des Störers nicht die gegebene ZFBandbreite überschreitet.

Wie im Abschnitt B. erwähnt, kann nun die Strategie eingesetzt werden, die PRF so zu verändern, daß die Ablage der spektralen Linien des lokalen Spektrums soweit von der Ablage des Störers entfernt wird, bis die ZF-Bandbreite überschritten wird, und damit ein Einmischen des Störers in das ZF-Signal durch die Filterbandbreite auf ZF-Ebene unterdrückt wird.

Es gibt nun Radarsysteme, welche ebenfalls ein Dauerstrichsignal erzeugen, welches jedoch in seiner Trägerfrequenz nicht konstant ist, sondern über die Zeit mit einer angestrebten linearen Charakteristik über einen gegebenen Frequenzhub frequenzmoduliert werden (FMCW-Radar). Da der gegebene Frequenzhub mit hoher Wahrscheinlichkeit mehrere Linien des lokalen Spektrums des zu entstörenden Systems überdeckt, ist die Strategie des Verschiebens der Linien sinnlos.

Der breitbandige Störer wird vielmehr zu einem bestimmten Zeitpunkt auf jeden Fall den Abstand der ZF-Bandbreite zu einer beliebigen Linie des lokalen Spektrums des zu entstörenden Systems unterschreiten, und damit eine Störung im ZF-Signal erzeugen. Also macht nur eine Strategie Sinn, das Ausmaß dieser unvermeidlichen Störung zu mindern.

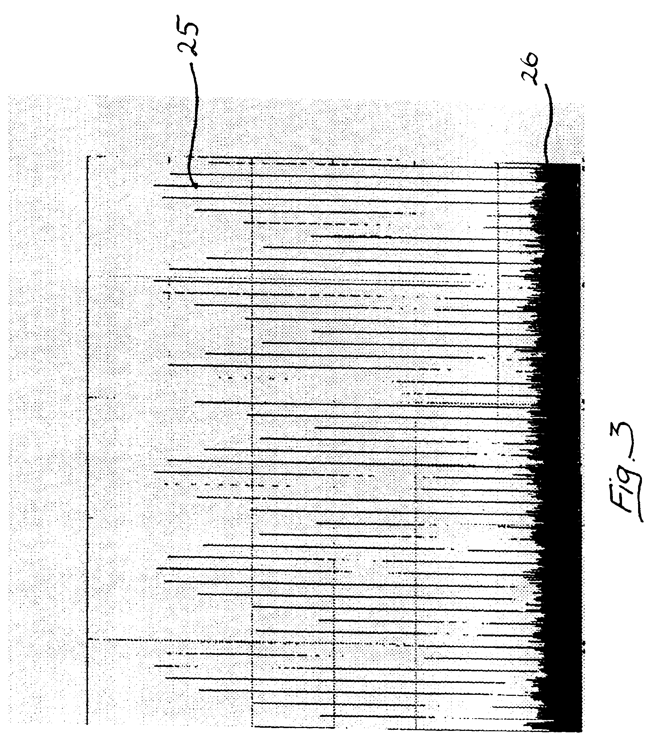

Genau dies erfolgt durch die spektrale Spreizung. Die Höhe der Linien des lokalen Spektrums entscheiden, wie stark der Störer bei Treffen der Linien in das ZF-Signal einfließt. Durch die spektrale Spreizung wird die Amplitude der Linien stark reduziert (z.B. um bis zu 20dB), wodurch der Einfluß des Störers im ZF-Signal im gleichen Maße gemindert wird. Allerdings erfolgt das Eintreten der Störung nun nicht mehr zu gewissen diskreten Zeitpunkten, die das Treffen einer Linie durch den Störer charakterisieren, sondern sie tritt kontinuierlich auf, dafür mit einer erheblich geminderten Amplitude. Man kann also von einer zeitlichen Spreizung des Störers sprechen (vgl. Fig. 3).

zu D.        variable Dämpfung des Sendesignals

Wie schon in der Einleitung erläutert, bietet das "equivalent time sampling" (ETS)-System den Vorteil, die Entfernung vorzugeben, in welcher nach potentiellen Zielen gesucht wird. Da die Dämpfung des Empfangssignals mit der vierten Potenz der Entfernung zunimmt, begründet allein die Vorgabe des Meßbereichs eine hohe Signaldynamik. Als Beispiel errechnet sich aus einer minimalen Entfernung von 0,25m und einer maximalen Entfernung von 1Om eine Signaldynamik von 64dB.

Hinzu kommt ein Dynamikanteil, der durch die effektive Reflexionsfähigkeit der potentiellen Ziele begründet ist. In der Annahme eines RCS (reflective cross section) von O,O1m$^2$ für das kleinste zu detektierende Ziel und eines RCS von 5m$^2$ für das größte zu detektierende Ziel ergibt sich ein Dynamikanteil von 27dB. Ähnlich wie bei der Dämpfung über die Entfernung ist die ungefähre Größenordnung der Zielreflexion eine bekannte Größe, wenn man in der Signalverarbeitung eine sogenannte Zielverfolgung (Tracking) einsetzt und damit ein Ziel bestimmter Größenordnung in einer bestimmten Entfernung erwartet.

Um die Gesamtdynamik von etwa 90 dB für die Signalverarbeitung auf zubereiten, könnte beispielsweise ein A/D-Wandler mit einer hohen Quantisierung eingesetzt werden. Das oben angeführte Beispiel würde einen 16bit-Wandler erfordern. Voraussetzung wäre allerdings, daß die analoge Mischung, Vorverstärkung und Filterung des Empfangssignals eine Dynamik von 90 dB verkraften könnte. Dies ist ohne erheblichen technischen Aufwand nicht realisierbar.

Darum schlägt die Erfindung vor, einen Teil der Gesamtsignaldynamik durch ein variables Dämpfungsglied im Sendepfad aufzufangen. Ein solches Dämpfungsglied soll vorzugsweise zwischen Leistungsteiler und Sendemodulationsschalter angeordnet werden. Die realisierbare Größenordnung einer steuerbaren Dämpfung eines variablen Dämpfungsgliedes beträgt etwa 30 dB. Damit soll vorzugsweise die Raumdämpfung im sehr nahen Meßbereich beispielsweise zwischen 0,25m und 1,4m abgefangen werden. Des weiteren soll insbesondere das Übersprechen des Sendesignals in den Empfangspfad im extremen Nahbereich (das sogenannte Eigenecho) durch das Ansteuern einer maximalen Dämpfung der Sendeleistung gemindert werden.

zu E.        variable Dämpfung des Empfangssignals

Die Amplitude der ZF-Signale hängt nicht nur von der Sendeleistung und damit der Empfangsleistung sondern auch von der Leistung der lokalen Pulsfolge ab. Mit dem Teilungsverhältnis des Leistungsteilers, welcher einen kleinen Teil der Oszillatorleistung in den lokalen Pfad abzweigt, wird somit die Größenordnung der Leistung der lokalen Pulsfolge starr vorgegeben. Dies entspricht einer Arbeitspunkteinstellung der eingesetzten Mischerdioden, welche für die zu mischenden Kleinsignale in etwa in ihrem Durchlaßknickpunkt betrieben werden sollten.

Die Veränderung der Arbeitspunkteinstellung der Mischerdioden durch die Vorgabe der lokalen Leistung erzeugt eine Veränderung der Amplituden der ZF-Signale. Approximiert man die Charakteristik der Dioden durch eine exponentielle Funktion, so ist die zweite Ableitung wiederum eine exponentielle Funktion, welche den Grad der Krümmung der Ursprungsfunktion kennzeichnet. Diese Krümmung bestimmt wiederum die Amplitude der Mischprodukte. Folglich steigt mit zunehmender lokaler Leistung die Größe der ZF-Signale.

Folglich schlägt die Erfindung vor, nicht nur den Sendepfad mit einem variablen Dämpfungsglied zu versehen, sondern für den lokalen Pfad ebenfalls ein variables Dämpfungsglied vorzusehen, welches zwischen Leistungsteiler und lokalem Modulationsschalter einzufügen wäre.

Unter der Annahme, daß das Dämpfungsglied im Sendepfad wie auch das Dämpfungsglied im lokalen Pfad mit der gleichen Charakteristik zur Kompensation der Raumdämpfung angesteuert werden, läßt sich so die doppelte Dynamik, nämlich etwa 60 dB, abfangen. Dies entspricht einer Kompensation der Raumdämpfung über eine Entfernung von 0,25m bis etwa 7,9m. Dies überdeckt nahezu den gesamten Meßbereich der vorgeschlagenen Einpark- und Rückfahrhilfe.

In einer Erweiterung der Erfindung wird vorgeschlagen, die beiden Dämpfungsglieder im Sende- und im lokalen Pfad zu einem Dämpfungsglied zwischen Trägeroszillator und Leistungsteiler zu kombinieren. Dies vermindert den hardwaretechnischen Aufwand unter Beibehaltung der erreichbaren variablen Systemdämpfung von 60dB.

Des weiteren bietet es sich an, die Funktionalität eines dritten Modulationsschalters, wie er in der deutschen Patentanmeldung DE 199 02 076 vorgeschlagen wurde, mit der Funktionalität eines Dämpfungsgliedes zu kombinieren. Dies setzt voraus, daß der dritte Modulationsschalter nicht nur in zwei diskreten Dämpfungsstufen sondern bezüglich seiner Dämpfung kontinuierlich angesteuert werden kann. Dies soll bedeuten, daß der dritte Modulationsschalter im Durchlaßzustand nur in dem Maße geöffnet wird, wie es für die vorgesehene Sende- und lokale Leistung vorgesehen ist.

zu F.        Veränderung des Zielbeleuchtungszeitraums

Wie im Abschnitt B. im Unterpunkt b) schon erklärt, hängt die Anzahl der Einzelpulse, welche von der Reflexion eines Ziels zu einem ZF-Puls integriert werden, unter anderem vom Zielbeleuchtungszeitraum und damit von der Sweepgeschwindigkeit ab. Somit ist die Sweepgeschwindigkeit ein weiterer Stellparameter, um die integrierte Empfangsleistung zu variieren und damit einen weiteren Anteil der Zieldynamik zu kompensieren.

Ziel der Erfindung ist es, die Sweepgeschwindigkeit vom nahen zum fernen Meßbereich zu vermindern. Dies bedeutet für die Ansteuerung der internen Totzeit durch die Sweepspannung, daß die interne Totzeit nicht linear über die Zeit zunimmt, sondern degressiv z. B. in einem logarithmischen Verlauf zunimmt. Die erste Ableitung der Ansteuerkurve der Totzeit über die Zeit charakterisiert den Verlauf der Sweepgeschwindigkeit über die Zeit. Dieser Verlauf ist hyperbolisch, also mit der Zeit monoton fallend.

Die Sweepgeschwindigkeit ist somit im nahen Bereich höher als im ferneren Bereich. Dadurch ist die integrierte Energie eines ZF-Pulses einer Reflexion im nahen Bereich geringer als die integrierte Energie eines ZF-Pulses im entfernteren Bereich. Somit kann auf diesem Weg ein Teil der Raumdämpfung kompensiert werden.

Es ist jedoch darauf zu achten, daß sich die ZF-Pulsbreite proportional zur Sweepgeschwindigkeit ändert. Dies spielt eine Rolle bei der Wahl passender Kreuzkorrelationsmuster zur optimierten Zielentdeckung. Ebenfalls kritisch ist der Meßdurchsatz des Systems. Wird die Sweepgeschwindigkeit beliebig weit vermindert, so steigt die Sweepzeit zur Betrachtung des Gesamtbereichs erheblich an. Hier muß eine sinnvolle Abwägung getroffen werden.

zu G.        Einsatz eines zweikanaligen I/Q-Systems

Das gegebene Pulsradarsystem arbeitet mit einer kohärenten homodynen Mischung der Empfangspulsfolge mit der lokalen Pulsfolge. Es wird zur Mischung ein sogenannter integrierender Phasendetektor eingesetzt. Dabei entscheidet die Phasenlage des Trägers der Empfangspulsfolge zum Träger der lokalen Pulsfolge über die Größe und Polarität des Ausgangssignals des Mischers. Das Ausgangssignal ist mit einem Faktor belegt, der dem Skalarprodukt der beiden Zeiger entspricht, z. B. $U\_aus = k\_lokal * k\_empfang * \cos(\Delta\Phi)$.

Beide Träger werden vom gleichen Sendeoszillator generiert, sind also in der Frequenz gleich. Jedoch bestimmt der Abstand eines reflektierenden Objekts zum Sensor über die Phasenlage $\Delta\Phi$ des Trägers des Ernpfangssignals im Vergleich zur Phasenlage des lokalen Trägers. Die Phasenlage des Empfangssignals wiederholt sich dabei periodisch mit der Veränderung der Entfernung des reflektierenden Objekts vom Sensor um die Hälfte der Trägerwellenlänge.

Bei 24GHz Trägerfrequenz ist die Wellenlänge 1,25 cm. Verschiebt man ein reflektierendes Objekt ausgehend von einer Ablage mit einem maximalen Mischersignal (dort gilt $\Delta\Phi = 0°$ oder $180°$) um ein Viertel der Wellenlänge, also etwa um 3mm, so wird aufgrund des dann erreichten Phasenwinkels von $\Delta\Phi = 90°$ oder $270°$ das Mischerausgangssignal zu Null. Das Objekt wird nicht mehr detektiert.

Dieses Problem der Detektionsblindstellen spielt in der Praxis eine Rolle für die Detektion relativ nichtbewegter Objekte. Diese Situation ist für eine Park- und Rückfahrhilfe realistisch. Das Problem kann umgangen werden, indem heterodyn auf eine Zwischenfrequenz ungleich Null gemischt wird. Das zu verbessernde System mischt jedoch homodyn und ist demzufolge mit dem Problem belastet.

Die Erfindung schlägt vor, dem Problem zu begegnen, indem ein zweikanaliges Empfangssystem verwendet wird. Dabei wird entweder das Empfangs- oder das lokale Signal geteilt. Einer der doppelt ausgeführten Pfade wird mit einem Phasenschieber versehen, welcher den Träger des Signals um $90°$ dreht. Die Mischung des gedrehten Signals erzeugt eine sinusförmige Abhängigkeit von der Phasenlage zwischen Empfangs- und lokalem Signal. Man spricht bei nicht gedrehten Kanal von "in phase", beim gedrehten Kanal von "quadrature phase". Das gesamte Konzept ist in der Literatur bekannt als I/Q-Mischung. Die Erfindung hat nicht die grundsätzliche Erfindung eines I/Q-Systems zum Inhalt, sondern dessen Einsatz in einer Park-/Rückfahrhilfe.

Durch die I/Q-Mischung ist ein Objekt in jedem Fall in einem der Kanäle erkennbar, und somit das Blindstellenproblem gelöst. Verknüpft man die Signale beider Kanäle beispielsweise in Form einer jeweiligen Quadrierung beider Signale und einer dann folgenden Addition, so erhält man den phasenunabhängigen Betrag.

zu H.        Driftkompensation der Laufzeitmessung über ein Zeitmeßglied

Entscheidend für die Präzision des eingesetzten Meßverfahrens ist die Präzision des variablen Totzeitgliedes, welches angesteuert von der Sweepspannung die Pulsmodulation der lokalen Pulsfolge im Vergleich zur Modulation der Sendpulsfolge verzögert. Der Präzision einer reinen Steuerstruktur sind durch Temperatur- und Materialdrift der Komponenten eines Totzeitgliedes inakzeptable Grenzen gesetzt.

Folglich wird erfindungsgemäß ein Zeitmeßglied eingeführt, welches die real erzeugte Verzögerung von Triggerflanken für die Pulsmodulation von Sende- und lokaler Pulsfolge vermißt. Dies schafft die Möglichkeit, eine Kalibrierungsregelschleife über eine Softwarekompandierung durchzuführen. Weitere Details finden sich in der deutschen Patentanmeldung DE 198 59 082.

zu I.      kombinierte TGC/AGC

Einen weiteren Teil der Gesamtsignaldynamik kann weiterhin von variablen ZF-Verstärkern aufgefangen werden, welche den Mischern nachgeschaltet sind. Dies setzt eine ausreichende Signaldynamik der vorgeschalteten Empfangsstufen, also HF-Empfangsvorverstärkung und Mischer voraus. Ziel ist es, die Signaldynamik so weit zu kompensieren, bis ein einfacher A/D-Wandler (z.B. 8bit) ausreicht, um die Digitalisierung der Signale mit einer ausreichenden Quantisierung vornehmen zu können.

Das Konzept einer variablen Verstärkung, welche in einer kombinierten Steuer/Regelstruktur vorgegeben wird, ist in der deutschen Patentanmeldung DE 198 21 188 beschrieben, auf die verwiesen wird.

zu J.       adantive ZF-Filtercharakteristiken

Auf der HF-Ebene stellt die Mischung der lokalen mit der Empfangspulsfolge nachrichtentechnisch den Einsatz eines sogenannten "matched filters" zur Optimierung des Signalrauschabstands eines Einzelpulses dar. Der Einsatz eines Matched Filters auf ZF-Ebene auf das integrierte ZF-Signal kann man softwaretechnisch durch den Einsatz von passenden Korrelationsmustern lösen. Es macht Sinn, schon im ZF-Eingangskanal eine Hardwarefilterung in Form von Bandpässen vorzusehen.

Die ZF-Pulsform hängt von der eingesetzten HF-Pulsbreite und von der Sweepgeschwindigkeit ab. Folglich verändert sich auch das Nutzsignalspektrum mit den Parametern HF-Pulsbreite und Sweepgeschwindigkeit.

Die Erfindung schlägt vor, die Eckfrequenzen der eingesetzten Bandpässe adaptiv in Abhängigkeit von den vorgegebenen Paramtern HF-Pulsbreite und Sweepgeschwindigkeit anzupassen, um das Eingangsrauschen am A/D-Wandler zu minimieren.

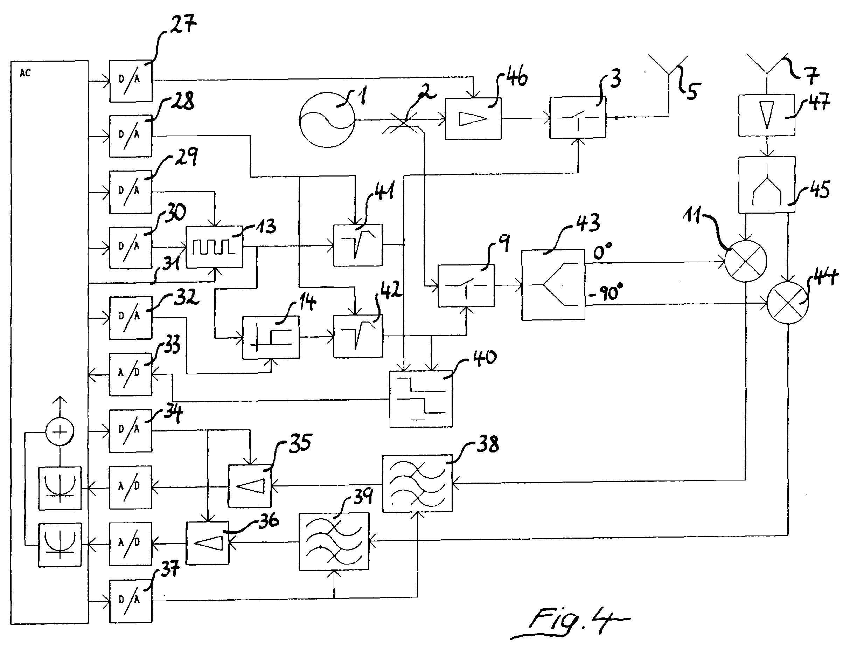

In Fig. 4 ist der Aufbau eines erfindungsgemäßen Nahbereichs-Pulsradars gemäß einer bevorzugten Ausführungsform für den Einsatz als Einpark- oder Rückfahrhilfe bei Kraftfahrzeugen dargestellt. Erfindungswesentliche Merkmale der vorliegenden Erfindung können der Beschreibung und den Zeichnungen entnommen werden.

**Bezugszeichenliste**

| | |
|---|---|
| 1 | Basisbandoszillator |
| 2 | Leistungsteiler Empfangspulse/lokale Pulse |
| 3 | Schalter zur Modulation der Sendepulse |
| 4 | Sendepulse (TX-Pulse) |
| 5 | Sendeantenne |
| 6 | Objekt |
| 7 | Empfangsantenne |
| 8 | Empfangspulse (RX-Pulse) |
| 9 | Schalter zur Modulation der lokalen Pulse |
| 10 | lokale Pulse (LO-Pulse) |
| 11 | Mischer |
| 12 | Mischer-Ausgangssignal |
| 13 | Pulswiederholfrequenz (PRF)-Generator |
| 14 | variable lokale Verzögerung |
| 15 | Steuerspannung (Sweep) |
| 16 | ISM-Band |
| 17 | Leistungsgrenze im ISM-Band |
| 18 | Leistungsgrenze außerhalb des ISM-Bandes |
| 19 | Dauerstrichzeiger auf Trägerfrequenz |
| 20 | Pulswiederholfrequenz |
| 21 | Zeiger der periodischen Pulsfolge |

| 22 | Einhüllende (= Spektrum des Basisimpulses) |
|----|---|
| 23 | Trägerfrequenz |
| 24 | Spektralflächenbandbreite |
| 25 | Linien des lokalen Spektrums (normal) |
| 26 | Linien des lokalen Spektrums (gespreizt) |
| 27 | D/A-Wandler Empfangssignaldämpfung |
| 28 | D/A-Wandler Pulsweite |
| 29 | D/A-Wandler PRF Jitter |
| 30 | D/A-Wandler PRF Bias |
| 31 | PRF Enable |
| 32 | D/A-Wandler Sweep Verzögerung |
| 33 | A/D-Wandler Kalibration Verzögerung |
| 34 | D/A-Wandler TGC/AGC |
| 35 | variabler Verstärker |
| 36 | variabler Verstärker |
| 37 | D/A-Wandler Pulsweite |
| 38 | adaptives Signalfilter |
| 39 | adaptives Signalfilter |
| 40 | Kalibration Verzögerung Messung |
| 41 | Generator der Sendepulse |
| 42 | Generator der lokalen Pulse |
| 43 | Leistungsteiler lokale Pulse |
| 44 | weiterer Mischer |
| 45 | Leistungsteiler Empfangssignal |
| 46 | Sendesignalverstärker |
| 47 | Empfangssignalverstärker |

**Patentansprüche**

1. Verfahren zum Bestimmen des Abstands zu einem Objekt mittels eines gepulsten elektromagnetischen Signals, wobei die Laufzeit des Signals zu dem Objekt und wieder zurück mit einem vergleichenden Meßprinzip ermittelt und aus der ermittelten Laufzeit der Abstand zu dem Objekt bestimmt wird, **dadurch gekennzeichnet**, daß zunächst ein zu beobachtendes Entfernungsfenster, in dem das Objekt potentiell liegt, innerhalb des gesamten Meßbereichs ermittelt wird und dann in dem Entfernungsfenster der Abstand zu dem Objekt bestimmt wird.

2. Verfahren nach Anspruch 1, dadurch gekennzeichnet, daß die Laufzeit des Signals nach dem Equivalent Time Sampling (ETS)-Verfahren ermittelt wird.

3. Verfahren nach Anspruch 1 oder 2, dadurch gekennzeichnet, daß zumindest einer der Parameter des Verfahrens, Pulswiederholfrequenz, Dämpfung des Sendesignals, Dämpfung des Empfangssignals oder Zielbeleuchtungszeitraum, in Abhängigkeit von dem zu beobachtenden Entfernungsfenster vor der Bestimmung des Abstands zu dem Objekt eingestellt wird.

4. Verfahren nach einem der Ansprüche 1 bis 3, dadurch gekennzeichnet, daß zumindest einer der Parameter des Verfahrens, Pulswiederholfrequenz, Dämpfung des Sendesignals, Dämpfung des Empfangssignals oder Zielbeleuchtungszeitraum, in Abhängigkeit von der wahrscheinlichen Refexionsintensität des zu erwartenden Objekts vor der Bestimmung des Abstands zu dem Objekt eingestellt wird.

5. Verfahren nach einem der Ansprüche 1 bis 4, dadurch gekennzeichnet, daß die Pulsweite der Sendepulse und der lokalen Pulse variiert werden.

6. Vorrichtung zum Bestimmen des Abstands zu einem Objekt mittels eines gepulsten elektromagnetischen Signals, mit einem Mischer, der die Laufzeit des Signals zu dem Objekt und wieder zurück anhand eines vergleichenden Meßprinzips ermittelt, und mit einer Auswerteeinrichtung, die aus der ermittelten Laufzeit den Abstand zu dem Objekt bestimmt, **dadurch gekennzeichnet**, daß die Vorrichtung Mittel zum Variieren zumindest eines der Parameter, Pulswiederholfrequenz, Dämpfung des Sendesignals, Dämpfung des Empfangssignals oder Zielbeleuchtungszeitraum, aufweist.

7.  Vorrichtung nach Anspruch 6, dadurch gekennzeichnet, daß die Vorrichtung als ein Pulsradar ausgebildet ist.

8.  Vorrichtung nach Anspruch 7, dadurch gekennzeichnet, daß die Vorrichtung als eine Park- und/oder Rückfahrhilfe für ein Kraftfahrzeug ausgebildet ist.

*Fig.1*

EP 1 048 960 A2

*Fig.2*

*Fig. 3*

Fig. 4